# EUROPEAN PATENT SPECIFICATION

(11) **EP 2 069 645 B1**
(45) Date of publication and mention of the grant of the patent: **10.04.2013**
(21) Application number: 07837791.8
(22) Date of filing: 06.09.2007
(51) Int. Cl.: F16B 25/00, F16B 33/02

(54) **DRYWALL FASTENER**
TROCKENMAUERFESTIGER
DISPOSITIF DE FIXATION POUR CLOISON SÈCHE

(30) Priority: 06.09.2006 US 842478 P
(43) Date of publication of application: 17.06.2009
(73) Proprietor: Illinois Tool Works Inc., Glenview, IL 60026 (US)
(72) Inventor: ERNST, Richard J., San Diego, CA 92130 (US); GRIMM, John P., Santee, CA 92071 (US)
(74) Representative: Bloch, Gérard
(86) International application number: PCT/US2007/019419
(87) International publication number: WO 2008/030507

(56) References cited:
- EP-A- 0 400 535
- WO-A-2005/038275
- DE-U1- 29 509 487
- US-A- 5 991 998
- US-A1- 2006 018 730

## Description

### BACKGROUND OF THE INVENTION

### 1. Field of the Invention

The present invention is directed to a drywall fastener for use in a friable material, including a self-drilling drywall fastener to be used in drywall mounted to a stud member or the like.

### 2. Description of the Related Art

Because drywall is a friable material, mounting articles thereto can be difficult. In the past, at least three methods have been used. For light weight articles, small plastic expansion anchors have been used. These expansion anchors have typically required three steps to install: first, a hole is drilled into the drywall; second, the drywall fastener insert is driven into the drilled hole; and finally, a threaded fastener is advanced into the drywall fastener, spreading the drywall fastener into engagement with the drywall. However, expansion anchors can typically hold light loads only.

For heavy duty applications, toggle bolts have been used. While toggle bolts have been effective, they are also generally expensive because they involve parts which must move relative to one another. Toggle bolts also have been known to be difficult to install.

Self-drilling anchors for mounting heavier loads also have been used. These self-drilling anchors typically are installed by drilling into the drywall with the drywall fastener itself. The drywall fastener also includes threading having a high thread height to provide a high pullout in the drywall. Examples of self-drilling anchors include the drywall fastener sold under the trademark E-Z ANCOR manufactured by ITW Buildex, and those disclosed in U.S. Patents 4,601,625, 5,190,425, and 5,558,479, all of which are assigned to the assignee of this application.

Self-drilling anchors have proved effective for holding higher loads when installed in drywall alone. However, in most cases the drywall is mounted to wood support members, or studs, that are unseen by the user, and typically the location of these support members are unknown and unchecked by the user. When a user of a typical self-drilling fastener attempts to install the drywall fastener in drywall at a location of a support member, the drywall fastener is unable to drill into the support member, causing the drywall fastener to spin in place so that the drywall fastener's high threading strips out the drywall, resulting in failure of the drywall fastener and creating an unsightly scar on the wall. Even if the drywall fastener is able to drill into the support member slightly, the anchors have been known to tightly engage the support member and break due to torsion on the anchor.

To install hooks, holders, or the like in drywall, many consumers use ordinary wood screws. While these may appear to work initially, the threads are generally too closely spaced and too low to achieve adequate contact with the drywall. Most commonly, these types of screws tend to bore a hole in the drywall, rather than gripping the drywall, leading to poor holding ability. Unless the installer locates a stud behind the drywall in which to drive the screw, an unsatisfactory result usually follows. While the use of anchors as described above generally overcomes this problem, existing anchors are usually unable to penetrate and attach to a stud or other structure behind the drywall, and require the multi-step installation process, i.e., initially centering and driving the anchor and then driving the proper fastener into the anchor to hold the object to be mounted to the wall. In some cases, the process may require pre-drilling of a pilot hole for the anchor, adding yet another step to the process. Also, it is important to utilize the proper screw or other fastener which properly fits and grips the anchor in order to obtain a secure installation. The provision of a suitable self-drilling drywall screw would greatly simplify this process.

What is needed is a self-drilling fastener for use in drywall that can be installed either in drywall, or in drywall and a support member, and is capable of handling a heavy load.

### BRIEF SUMMARY OF THE INVENTION

To this end, the invention relates to a self drilling element according to claim 1.
A self drilling element as described in the preamble portion of claim 1 is known by WO 2005/038275, US 5 991 998 and DE 29509487.
However, considering the teaching of WO 2005/038275, it relates to an anchor and not to a fastener.
The head of this anchor is not as large and thick as the head of the fastener of the instant case. Moreover, it would not be obvious to modify the anchor of this prior reference to fill in its bore, this would have made the anchor unsuitable for its intended purpose and changed its principle of operation. The anchor would not be able to receive a fastener as it was designed to.
US 5991998 discloses a drilling screw intended to be first hammered into the gypsum board. DE 29509487 discloses an anchor, not a fastener, whose head is quite different from the head of the fastener of the instant case.

These and other features and advantages are evident from the following description of the present invention, with reference to the accompanying drawings,

### BRIEF DESCRIPTION OF THE SEVERAL VIEWS OF THE DRAWINGS

FIG. 1 is a perspective view of a self drilling drywall fastener according to the present invention.
FIG. 2 is a side view of the self drilling drywall fastener of FIG. 1.
FIG. 3 is a side view of the self drilling drywall fastener, rotated 90° from the view of FIG. 2.
FIG. 4 is a top view of the self drilling drywall fastener.
FIG. 5 is a bottom view of the self drilling drywall fastener.
FIG. 6 is a top view of another embodiment of the self drilling drywall fastener.
FIG. 7 is a bottom view of the self drilling drywall fastener of FIG. 6.
FIG. 8 is a side view of the self drilling drywall fastener of FIG. 6.
FIG. 9 is a side view of the self drilling drywall fastener, rotated 90° from the view of FIG. 8.
FIG. 10 is a perspective view of the self drilling drywall fastener of FIG. 6.
FIG. 11 is a top view of another embodiment of the self drilling drywall fastener.
FIG. 12 is a bottom view of the self drilling drywall fastener of FIG. 11.
FIG. 13 is a side view of the self drilling drywall fastener of FIG. 11.
FIG. 14 is a side view of the self drilling drywall fastener, rotated 90° from the view of FIG. 11.
FIG. 15 is a perspective view of the self drilling drywall fastener of FIG. 11.
FIG. 16 is a side view of the self drilling drywall fastener of FIG. 11 in the process of being installed but immediately before it contacts the underlying support member.
FIG. 17 is the drywall fastener of FIG. 16 after stalling has occurred but before the drywall fastener draws into the underlying support member.
FIG. 18 is the drywall fastener of FIGS. 16 and 17 with installation completed.

### DETAILED DESCRIPTION

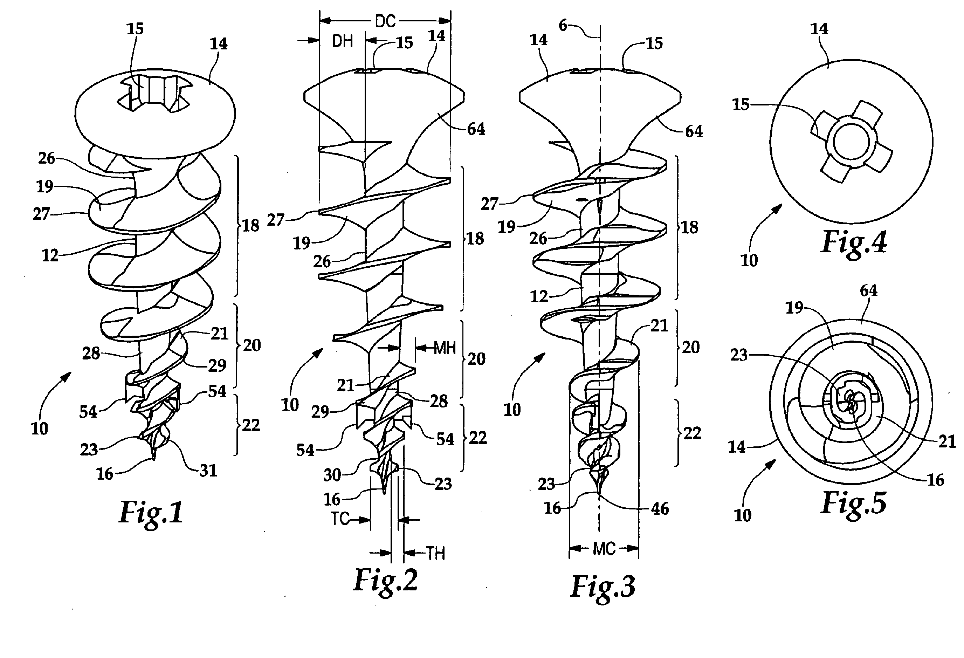

Referring to FIGS. 1-5, a novel self-drilling drywall fastener 10 is shown. Here, drywall fastener 10 is described in its general aspects and then, below, with respect to several exemplary embodiments, including the break-off tip embodiment shown in FIGS. 1-5.

Drywall fastener 10 is for use in a friable material, such as drywall, mounted on a member, such as a support member or stud, the novel drywall fastener 10 having an elongated body 12 with an axis 6, an enlarged head 14 having torque transmitting surfaces 15 therein, a proximal portion 18 proximate enlarged head 14, an intermediate portion 20, a distal portion 22, and a drilling tip 16 generally opposite enlarged head 14. The proximal portion 18 has a threaded exterior, such as drywall gripping threading 19, having a root 26, a crest 27 with a crest diameter DC, and a thread height DH. The intermediate portion 20 has a threaded exterior, such as member gripping threading 21, having a root 28, a crest 29 with a crest diameter MC substantially smaller than drywall gripping threading crest diameter DC, and a thread height MH substantially smaller than drywall gripping thread height DH. The distal portion 22 has a threaded exterior, such as drilling threading 23, having a root 30 that tapers toward drilling tip 16, a crest 31 with a crest diameter TC substantially smaller than drywall gripping threading crest diameter DC, and a thread height TH substantially smaller than drywall gripping thread height DH.

Drywall fastener 10 is for driving into drywall for mounting an article to drywall. Drywall fastener 10 can be used in a manner similar to traditional fasteners when it is being installed in drywall. However, drywall fastener 10 includes features that allow drywall fastener 10 to increase the amount of load that the friable material can withstand, and also allow drywall fastener 10 to penetrate and engage in a support member, such as a wood support stud, and that provide added strength to withstand the large forces of driving drywall fastener 10 into drywall and support member.

The friable material can be one of several friable materials used in construction wherein it is desired to mount an article to the friable material in order to increase the amount of load that the friable material can withstand. An example of the friable material is gypsum based drywall, such as the gypsum drywall sold under the trademark SHEETROCK by United States Gypsum. Drywall typically has a thickness T of ½ inch or 5/8 inch, but it can be obtained in other thicknesses, such as 3/8 inch.

Typically, friable materials such as drywall are mounted to a member, such as a wood structural support member, plywood, or another friable material, such as another layer of drywall. The member can be a support member, such as a wood support member, for example a 2 x 4 stud or the like, evenly spaced from other wood studs, e.g. every 16 inches, or a metal support member, such as a steel support stud. Support members are substantially more resistant to pullout than drywall because they are much less likely to break apart. Although drywall fastener 10 can be used on drywall mounted to another sheet of drywall, or other friable materials, the present invention will be described for use with support members such as a wood support stud.

Drywall fastener 10 can have different lengths to accommodate different thicknesses of article to be mounted to the drywall. Drywall fastener10 is designed so that it can be used if the article is relatively thin or relatively thick, in which case drywall fastener10 may have a greater length to achieve full engagement with the drywall. Ideally, the length of drywall fastener 10 is selected to limit the depth of embedment in the stud or other support member, thereby reducing the associated installation torque, and drive time, so that a user can install a plurality of drywall fasteners 10 in a relatively short period of time with a minimum of effort.

### DISTAL PORTION

Turning back to FIGS. 1-3, distal portion 22 allows drywall fastener 10 to drill through drywall and support member as it may be driven manually by a user so that a separate pre-drilling step is not needed. Distal portion 22 includes a drilling tip 16, and in one embodiment, shown in FIG. 2, drilling tip 16 is generally conical in shape and is coaxial with body 12 so that drilling tip 16 comes to point 46 at body axis 6. The drilling tip 16 includes a sharp point 46 to quickly engage and penetrate the surface of the drywall and the front surface of the stud or support member.

Distal portion 22 includes a threaded exterior having drilling threading 23 disposed on distal portion 22 for engaging drywall and support member. Drilling threading 23 includes a root 30 and a crest 31 having a crest diameter TC substantially smaller than drywall gripping threading crest diameter DC, and a thread height TH substantially smaller than drywall gripping thread height DH. Drilling thread height TH is also small enough so that the installation torque into the support member may be achieved manually by the typical user so that drywall fastener 10 can be driven into the support member. Threading 23 can also include a radius of curvature between the base of the thread 23 and root 30, to prevent the formation of stress concentrations at base of thread 23.

Continuing with FIGS. 2 and 3, drilling threading root 30 tapers from intermediate portion 20 toward drilling tip 16 so that the cross sectional area of drilling threading root 30 proximate drilling tip 16 is reduced with respect to the cross sectional area at intermediate portion 20. Thread height TH of drilling threading 23 remains substantially constant along the length of distal portion 22. However, because root 30 is relatively small, particularly at drilling tip 16, thread height TH can be larger, for example larger than thread height MH of member gripping threading 21, because the small root 30 allows a larger thread height without an overly large crest diameter TC.

Distal portion threading 23 and intermediate portion threading 21 engage drywall and drive drywall fastener 10 through drywall. If drywall fastener 10 is driven into a location wherein a support member is located behind drywall, drilling tip 16 hits support member, and if support member is relatively hard with respect to drywall, e.g., a wood support stud, then drywall fastener 10 typically spins within drywall without axially advancing into support member 10, referred to herein as stalling. As drywall fastener 10 stalls, distal portion threading 23 and intermediate portion threading 21 drill a hole of a predetermined size in drywall while drilling tip 16 drills into support member. Eventually drilling tip 16 drills to a depth into support member, usually between about 1/8 inch and about ¼ inch, that allows distal portion threading 23 to engage support member and begin pulling drywall fastener 10 through support member and drywall so that drywall gripping threading 19 can engage drywall.

It has been found that the size of the hole drilled into drywall by intermediate portion threading 21 is important in the grip created between drywall and drywall gripping threading 19, particularly if drywall fastener 10 is driven into drywall only. It has been found that for drywall threading having a crest diameter of about ½ inch, it is ideal for the hole drilled in the drywall to have a diameter of about ¼ inch. Therefore, distal portion 22 is designed to drill out a hole in drywall that generally maximizes to the extent practically attainable the pullout strength of drywall fastener 10 in drywall.

Continuing with FIG. 2, distal portion 22 can include at least one wing 54 that protrudes radially outwardly from distal portion 22 to ream out drywall to form a hole having a predetermined diameter selected to maximize pullout strength in drywall, particularly when drywall fastener 10 is driven into drywall only, with no support member behind the installation location. The wing 54 may extend to a distance from axis 6 that is approximately equal to the root radius of proximal portion 18 near head 14, wherein the root radius is half of the root diameter. Wings 54 are designed to break away when they hit support member so that wings 54 do not ream out support member, but only ream out drywall.

In the embodiment shown in FIG. 2, distal portion 22 includes a pair of wings 54 that protrude radially outwardly from distal portion 22. Wings 54 are evenly spaced around the perimeter of distal portion 22 so each of a pair of wings 54 are about 180° apart. Wings 54 protrude radially outwardly so that a width across wings 54 is approximately equal to root diameter of proximal portion 18 near head 14. If the hole reamed out by wings 54 is approximately equal to root diameter, the wings 54 ream out only as much drywall as is necessary, leaving behind a maximum amount of drywall for engagement with drywall gripping threading 19.

If, when drilling tip 16 hits support member, there is a momentary stall as drilling tip 16 drills into support member, as described above, the threading on drywall fastener 10 may begin to strip away a portion of the drywall. For this reason, it is important that drilling threading 23 engage support member and that distal portion 22 drill into support member quickly so that drywall fastener 10 does not excessively strip out drywall before being driven forward. Drilling threading 23 extends to an axial position that is as close to drilling tip 16 as possible so that drilling threading 23 can more quickly engage with support member. In one embodiment, drilling threading 23 extends substantially to said drilling tip 16 so that a lead of drilling threading 23 is axially spaced from drill tip point 46 by between about 0 inches, wherein drilling threading 23 extends substantially all the way to drilling tip 16, and about 0.06 inch. Ideally, the drilling threading 23 extends all the way to drilling tip 16, i.e. no space between tip point 46 and lead, however, it has been found that for a drilling tip that comes to a point, wherein the root essentially has a diameter of 0 inches, the drilling threading actually becomes axial, which can make it difficult for the drilling threading to engage support member. For this reason, the lead of drilling threading 23 can be spaced slightly from drilling tip 16, e.g. at about 0.02 inch.

Continuing with FIGS. 1 and 2, external threading 23 of distal portion 22 can include two generally helical threads arranged in a double helix. The double helix configuration of threads provides added support around distal portion 22 to help prevent distal portion 22 from collapsing due to the torsional forces of driving drywall fastener 10 into support member. Double helix threads also provide balanced driving into support member and faster engagement of drilling tip 16 with support member. In addition, the double lead threads extend to an axial position proximate to drilling tip 16 so that drywall fastener 10 can quickly engage and drill into support member.

Each thread of the double helix may have substantially the same pitch so that one of the threads does not overtake the other. The second thread may be spaced axially from first thread by approximately half the pitch of threads, i.e., about 0.1 inch for a pitch of about 0.2 inch, so that at every axial position along distal portion 22, there is a thread on either side providing structural support. The threads of a double helix may have substantially the same thread height.

A first thread of the double helix may continue as a thread 21 on intermediate portion 20 while a second thread is only present on distal portion 22. Both threads can also continue in a double helix on intermediate portion 20 (not shown) to provide structural support for intermediate portion 20 as well as distal portion 22. If second thread is extended onto intermediate portion 20, it provides improved grip with the support member.

### INTERMEDIATE PORTION

Returning to FIGS. 2 and 3, member gripping threading 21 is disposed on intermediate portion 20 and includes a root 28 and a crest 29 having a crest diameter MC substantially smaller than drywall gripping threading crest diameter DC. In the embodiment shown in FIG. 2, root 28 of intermediate portion 20 may taper slightly toward distal portion 22 so that the torque required to install drywall fastener 10 will be minimized, particularly in wood support members, because it allows the root diameter and crest diameter MC of intermediate portion 20 to be smaller. In one embodiment, member gripping threading root 28 tapers at an angle of between about ½ degree and about 4 degrees, and in one embodiment, about 2 ¼ degrees.

The largest crest diameter MC of intermediate portion 20 may be selected to maximize the gripping between drywall gripping threading 19 and drywall, particularly when drywall fastener 10 is to be installed in drywall only. For example, for a drywall fastener 10 to have a drywall gripping threading crest diameter DC of about ½ inch, it is desired that the largest member gripping crest diameter MC be about ¼ inch or smaller.

In contrast to drywall gripping threading 19, described below, member gripping threading 21 has a thread height MH that is substantially smaller than the thread height DH of drywall gripping threading 19. The crest diameter MC of intermediate portion 20 is also substantially smaller than the crest diameter DC of proximal portion 18 so that the required installation torque in a support member, such as a wood stud, is not excessive. The crest diameter MC and thread height MH of member gripping threading 21 may be selected so that it is small enough that it does not scar or tear drywall when drywall fastener 10 stalls when drilling into support member, described above, and so that member gripping threading 21 does not engage drywall during stalling, which could jack drywall away from support member.

Although larger thread heights MH, TH of intermediate portion 20 and distal portion 22 would result in higher pullout strength within support member, it would also greatly increase the torque required to drive drywall fastener 10 into wood or other support member materials, making it difficult for a user to install drywall fastener 10, particularly with a hand-driven screwdriver. Therefore, thread height MH, TH should be chosen to allow for an acceptable torque in the event that some part of the intermediate portion 20 is driven into support member.

In the embodiment shown in FIG. 1, threading 21 of intermediate portion 20 is one generally helical thread 21 and is a continuation of drilling thread and extends on to drywall engaging thread 19 (described below). External threading 21 of intermediate portion 20 can also be a double helix similar to the double helix shown in distal portion 22 to provide added structural support on intermediate portion 20. Intermediate threading 21 can also have a radius of curvature between the base of thread 21 and root 28 to prevent the formation of stress concentration along the base of thread 21.

The combined length of intermediate portion 20 and distal portion 22 is larger than the thickness of the drywall so that when drywall fastener 10 stalls before beginning to drill into support member, the larger crested threading 19 of proximal portion 18 (described below) is not engaged with drywall, which would tend to strip out the drywall. This length should also be long enough so that distal portion 22 completes its drilling of drywall before drywall gripping threading 19 begins to engage drywall, particularly when drywall fastener 10 is driven into drywall only. This is desirable because drilling into a material tends to axially advance through the material substantially slower than driving through the material with threading. For example, drywall fastener 10 is driven axially through drywall by drywall gripping threading 19 much faster than drywall fastener 10 can drill into drywall. If the drilling step is not completed before drywall gripping threading 19 begins to engage drywall, it is likely that drywall gripping threading 19 will strip out drywall rather than drive drywall fastener 10 through it. Additionally, it is important to properly proportion the lengths of intermediate portion 20 and distal portion 22 to the installation torques required to drive drywall fastener 10, particularly into support member.

### PROXIMAL PORTION

Returning to FIGS. 1-4, proximal portion 18 includes an exterior thread for engagement with drywall when drywall fastener 10 is installed so that the load of an article (e.g., if the article is a hook or holder, the load to be suspended or supported by the hook or holder) to be held by the fastener will be supported by drywall, particularly if drywall fastener 10 is driven into drywall only. Drywall gripping threading 19 taps a mating thread in drywall so that an engagement between drywall gripping threading 19 and drywall is accomplished. The threaded exterior includes threading 19 disposed on proximal portion 18 having a crest 27 with a crest diameter DC and a root 26. Drywall gripping threading 19 is high threading wherein the distance between crest 27 and root 26, or the thread height DH, is large relative to member gripping threading 21 and drilling threading 23. High drywall gripping threading 19 helps to maximize the surface area of drywall gripping threading 19 encountered by drywall, increasing the pullout strength. The thread height DH of drywall gripping threading 19 is substantially larger than the thread heights MH, TH of member gripping threading 21 and drilling threading 23, which provides for higher pullout strength in drywall. The diameter DC of drywall gripping threading crest 27 can remain essentially the same along the entire length of proximal portion 18. In one embodiment, the diameter DC of crest 27 is at least twice the diameter of root 26.

Turning to FIG. 5, approximately ¾ of a turn of drywall gripping threading 19 may be engaged behind drywall so that drywall engaging threading engages the paper on the rear surface of drywall. Engaging paper on drywall rear surface is particularly desirable when driving drywall fastener 10 into drywall only, because it has been found that engagement with the paper provides a substantial portion of the grip between drywall fastener 10 and drywall. Drywall gripping threading 19 is not intended to be driven into support member because the high drywall gripping threading 19 would require a very high torque to drive drywall fastener 10 into support member.

Returning to FIGS. 2 and 3, the root 26 of proximal portion 18 can be tapered toward intermediate portion 20, and so that the diameter of root 26 at the top of proximal portion 18 is larger than the diameter of root 26 at the bottom of proximal portion 18. In the embodiment shown in FIG. 2, tapered root 26 of proximal portion 18 and tapered root 28 of intermediate portion 20 are generally continuous and taper at approximately the same angle.

In the embodiment shown in FIGS. 1-3, exterior threading 19 of proximal portion 18 is one thread 19 that is a continuation of member gripping thread 21, except that drywall gripping threading 19 has a substantially larger crest diameter DC and a substantially larger thread height DH than the crest diameter MC and thread height MH of intermediate portion 20. In one embodiment, crest diameter DC of proximal portion 18 is about twice the crest diameter MC of intermediate portion 20.

There may be a transition zone between intermediate portion 20 and proximal portion 18 wherein the crest diameter and thread height enlarge from member gripping thread 21 to drywall gripping thread 19. In one embodiment, the transition zone extends for about ¾ of a thread turn. Drywall gripping threading 19 is generally helical, as best shown in FIG. 1. Drywall gripping threading 19 can also be a double helix of two threads, as described above, wherein one of the threads of the double helix can be a fine thread having a substantially smaller thread height than the thread height DH of drywall gripping thread 19. This second thread would provide added strength to drywall fastener 10. Drywall gripping thread 19 can also include a radius of curvature between the base of the thread 19 and root 26 to minimize stress concentration at the base of drywall thread 19.

The length of proximal portion 18, including head 14, may be slightly larger than the thickness of the drywall, so that there is a portion of drywall gripping threading 19 behind drywall rear surface to engage rear surface paper. The length DL of proximal portion 18 may be selected to balance the length of drywall gripping threading 19 engaging the paper on the rear surface of drywall with the torque required to drive that length of drywall gripping threading 19 into a support member, if drywall fastener 10 is driven into a location where a support member is located. In addition, it is desirable that drywall fastener 10 be usable with different thicknesses of drywall , so that a certain length of proximal portion 18 may allow threading 19 to engage rear surface paper in one thickness of drywall, but may be too short to engage rear surface paper in a thicker drywall, or conversely, proximal portion 18 may be too long so that too much of drywall gripping threading 19 must be driven into a support member for a thinner drywall, resulting in a higher required installation torque.

The pitch of drywall gripping threading 19 is chosen so that there is at least one full turn of drywall gripping threading 19 in drywall. This pitch (of drywall gripping threading 19) may be chosen so that between about 1 ¾ turns and about 2 ¼ turns, and ideally about 2 full turns of drywall gripping threading 19 may be embedded in drywall. In one embodiment, for drywall having a thickness of ½ inch or 5/8 inch, the pitch P of drywall gripping threading 19 is between about 1/8 inch and about 0.3 inch, and in one embodiment, about 0.2 inch. Preferably, the pitch of drywall gripping thread 19 is generally equal to the pitches of member gripping threading 21 and drilling thread 23. In one embodiment (not shown) the pitch of drywall gripping threading 19 proximate intermediate thread 20 has a larger pitch than the remaining thread 19 proximate enlarged head 14. When this larger pitched threading engages drywall, it pulls drywall fastener 10 into drywall relatively fast, helping to counteract any jacking, or lifting of the drywall away from the support member, that may tend to occur.

### HEAD

Turning to FIGS. 1-4, a surface 64 on the underside of the enlarged head 14 of drywall fastener 10 has an enlarged outer diameter with respect to drywall gripping threading root 26 to allow head 14 to grip an article to be fastened on drywall front surface. In one embodiment, head 14 has a head diameter of between about 0.45 inch and about 0.6 inch, and in one embodiment, about 0.515 inch. The head 14 also includes torque transmitting surfaces 15 so that drywall fastener 10 can be rotated with a driver by the user. The head 14 can include a recess 15 for receiving the tip of a driver wherein recess 15 is configured with torque transmitting surfaces 15 for a particular kind of driver. Illustrated recess 15 is a Phillips-type recess for receiving the tip of a Phillips-type driver; however, other torque transmitting configurations are embodied in this invention.

### METHOD OF INSTALLATION

The method by which a user installs an drywall fastener 10 in drywall comprises the steps of providing an elongated drywall fastener 10 having an axis 6, an enlarged head 14 having torque transmitting surfaces 15 therein, a drilling tip 16 generally opposite enlarged head 14, a proximal portion 18 proximate enlarged head 14, an intermediate portion 20, and a distal portion 22 extending to drilling tip 16, wherein the proximal portion 18 has a threaded exterior, with a crest diameter and a thread height, the intermediate portion has a threaded exterior, with a crest diameter substantially smaller than the proximal portion threading crest diameter, and a thread height substantially smaller than the proximal portion thread height, and the distal portion 22 has a threaded exterior with a crest diameter substantially smaller than the proximal portion threading crest diameter, and a thread height substantially smaller than the proximal portion thread height; positioning drilling tip 16 on drywall surface, and driving drywall fastener 10 into drywall so that the distal portion 22 drills through drywall and into any stud or other support member present, and the drywall gripping threading 19 engages a major portion of the thickness of the drywall.

### METHOD OF MAKING

A method of making a drywall fastener 10 comprises the steps of providing a mold having a cavity which has the same shape as drywall fastener 10 so that when the material sets, drywall fastener 10 is formed; feeding molten material, such as a zinc alloy, into the mold cavity, setting the molten material to form a drywall fastener, and removing the drywall fastener from the mold.

### SECOND EMBODIMENT

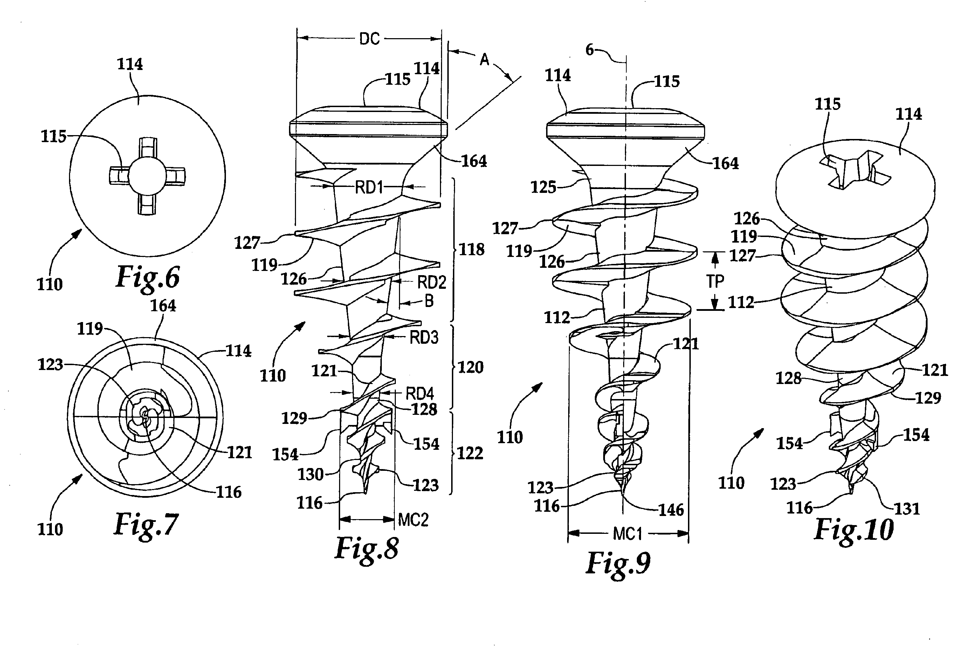

Referring now to FIGs. 6 to 10, another embodiment of a drywall fastener 110 in accordance with the invention is illustrated. The drywall fastener 110 is similar in most respects to drywall fastener 10 described above. Accordingly, like reference numerals are used to designate like parts, with the prefix 1. The drywall fastener 110 differs primarily in the diameter and taper of the proximal root portion 126, which will be seen to be considerably larger than the diameter and taper of the corresponding proximal root portion 26 in the embodiment of FIGs. 1 through 5. In this embodiment, the proximal root portion 126 has an outer diameter at RD1 of about 0.240inches and a distal root diameter 128 at RD2 of about 0.120 in accordingly, the proportion of the tapered root is about two to one. This taper defines an angle B of about 5.00°.

Moreover, the head 114 will be seen to be somewhat thicker than the head 14, with the underside 164 of the head tapering less sharply toward a transitional portion 125 of the body or thread root 26 of the fastener. This transitional portion 125 will be seen to taper upwardly to the increased diameter underside 164 of the head 114, less sharply than the corresponding underside 64 of the head 14. The angle A defined by the underside 164 of the head 114 is about 51.00°.

The increased maximum diameter of the root in the proximal portion 126, and transitional portion 125 provides additional strength and support for the head 114 and also for the drive recess 115 therein to assure that the fastener 110 can withstand the force of a drive tool entering the drive recess 115 and increased torque required to drive the tip through a substantially harder substrate material underlying a friable material or drywall, in which the fastener is intended for use. However, it will be seen that a lower intermediate portion 128 and a distal portion 130 of the root are substantially similar in diameter to the intermediate portion 28 and distal portion 130 of the fastener of FIGs.1 through 5. Hence, the amount of taper of the proximal root portion 126 is greater than that of the root portion 26 of the prior embodiment.

Accordingly, the proximal portion 118 has a threaded exterior, such as drywall gripping threading 119, having a root 126 with an outer diameter of about .240 in., and a crest 127 with a crest diameter DC, of about 0.500 inches. Thus, the ratio of the thread crest diameter to the root diameter is about 2.08:1. The intermediate portion 120 has a threaded exterior, such as member gripping threading 121, having a root 128 with an outer diameter about .185 in., and a crest 129 with a crest diameter MC of about 0.350 in., that is, substantially smaller than drywall gripping threading crest diameter DC. Thus, the intermediate portion has a thread crest to root diameter ratio of about 2.70:1. The distal portion 122 has a threaded exterior, such as drilling threading 123, having a root 130 with outer diameter of about .120 in. that tapers toward drilling tip 116, a crest 131 with a crest diameter TC1 of about 0.19 in., that is, substantially smaller than drywall gripping threading crest diameter DC. Thus, the ratio of thread crest to diameter in this distal portion is about 1.58:1. It will be noted that the thread root 130 and crest 131 are designated in this embodiment at a somewhat more proximal portion of the fastener than in the first embodiment.

### THIRD EMBODIMENT

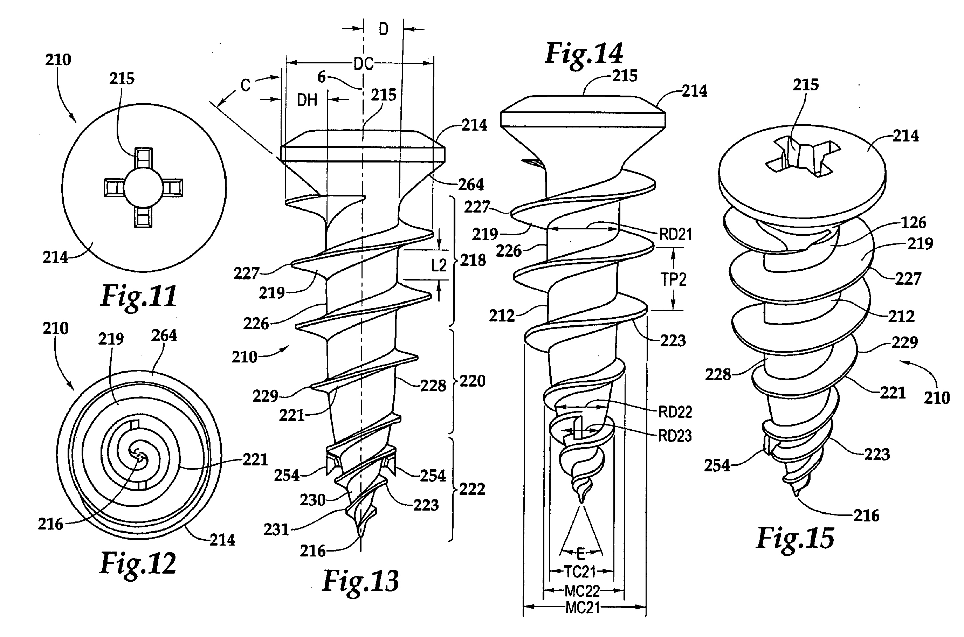

Referring now to FIGs. 11 to 15, another embodiment of a drywall fastener 210 in accordance with the invention is illustrated. The drywall fastener 210 is similar in most respects to drywall fastener 10 described above. Accordingly, like reference numerals are used to designate like parts, with the prefix 2. The drywall fastener 210 is intended for use in drywall having a thickness of .5 inches and may also be used in drywall having a thickness of .625 inches. The drywall fastener 210 differs primarily in the configuration of the body 212. Proximal root portion 226 will be seen to be considerably larger than the diameter of the corresponding proximal root portion 26 in the embodiment of FIGs. 1 through 5. This increased diameter of proximal root portion 226 allows for drilling into harder support structures under the drywall than the embodiments described previously. In this embodiment, the proximal root portion 226 has an outer diameter at RD21 of about 0.242 inches and a taper angle D of about 1.5°. From the intermediate portion 220 through the distal portion 222 the body of the screw transitions to an approximately conical shape with an included angle E of about 30°. The overall length of drywall fastener 210 is about 1.32 inches with the combined lengths of proximal portion 218, intermediate portion 220 and distal portion 222 being about 1.11 inches.

Moreover, the head 214 will be seen to be somewhat thicker than the head 14, with the underside 264 of the head tapering less sharply toward thread root 226 of the fastener. The angle C defined by the underside 264 of the head 214 is about 49°.

The increased maximum diameter of the root 226 in the proximal portion 218, provides additional strength and support for the head 214 and also for the drive recess 215 therein to assure that the fastener 210 can withstand the force of a drive tool entering the drive recess 215 and increased torque required to drive the tip through a substantially harder substrate material underlying a friable material or drywall, in which the fastener is intended for use. However, it will be seen that intermediate portion 220 near proximal portion 218 is substantially similar in diameter to proximal portion 218 but greater in diameter than intermediate portion 20 of the fastener of FIG. 1 through 5. Intermediate portion 220 begins to taper towards proximal portion 222. Hence, the amount of taper of the distal root portion 222 is greater than that of the root portion 22 of the first embodiment.

In the illustrated embodiment, the proximal portion 218 has a threaded exterior, such as drywall gripping threading 219, having a root 226 with an outer diameter of about .242 in., and a crest 227 with a crest diameter DC, of about 0.492 inches. Thus, the ratio of the thread crest diameter to the root diameter is about 2.03:1. The intermediate portion 220 has a threaded exterior, such as member gripping threading 221, having a root 228 with an outer diameter about .226 in., and a crest 229 with a maximum crest diameter MC21 of about 0.353 in. near proximal portion 218, that is, substantially smaller than drywall gripping threading crest diameter DC. Thus, the intermediate portion has a thread crest to root diameter ratio of about 1.56:1 near proximal portion 218. Near distal portion 222, intermediate portion 220 has a root diameter RD22 of about .166 inches and a crest MC22 of about .247 inches. The distal portion 222 has a threaded exterior, such as drilling threading 223, having a root 230 with outer diameter that tapers toward drilling tip 216, a crest 231 with a crest diameter TC21 of about 0.225 in. near wings 254, that is, substantially smaller than drywall gripping threading crest diameter DC. The root diameter RD23 in this area of distal portion 222 is about .122 inches. Thus, the ratio of thread crest to diameter in this area of distal portion 222 is about 1.84:1 and increases as distal portion 222 tapers to drilling tip 216. The final tapered section of distal portion 222 has a length of about .025 inches free of threading that concludes in drilling tip 216.

Thread pitch TP2 is about .2 inches throughout this embodiment, including the double threaded distal portion 222. In the double threaded distal portion 222 the distance between thread crests is about .1 inches but the distance from the crest of one thread to the crest of the same thread is about .2 inches. Proximal root 226 has an axial length L2 of about .095 inches between threads or about half of pitch TP2 in proximal portion 218.

Distal portion 222 contains about 1.25 revolutions of double threading as well as two drilling wings 254 that bore a hole in the drywall with a diameter approximately equal to the diameter of root 226 of the proximal portion 218. Each wing 254 comprises a generally triangular portion with one leg of the triangle approximately parallel to the outer bore of the hole to be drilled and a vertex of the triangle disposed generally towards the drilling tip 216. Wing 254 is attached to distal portion 222 at both root 230 and drilling thread 223. Wing 254 is designed to break off of distal portion 222 if the wing 254 encounters a hard underlying support material.

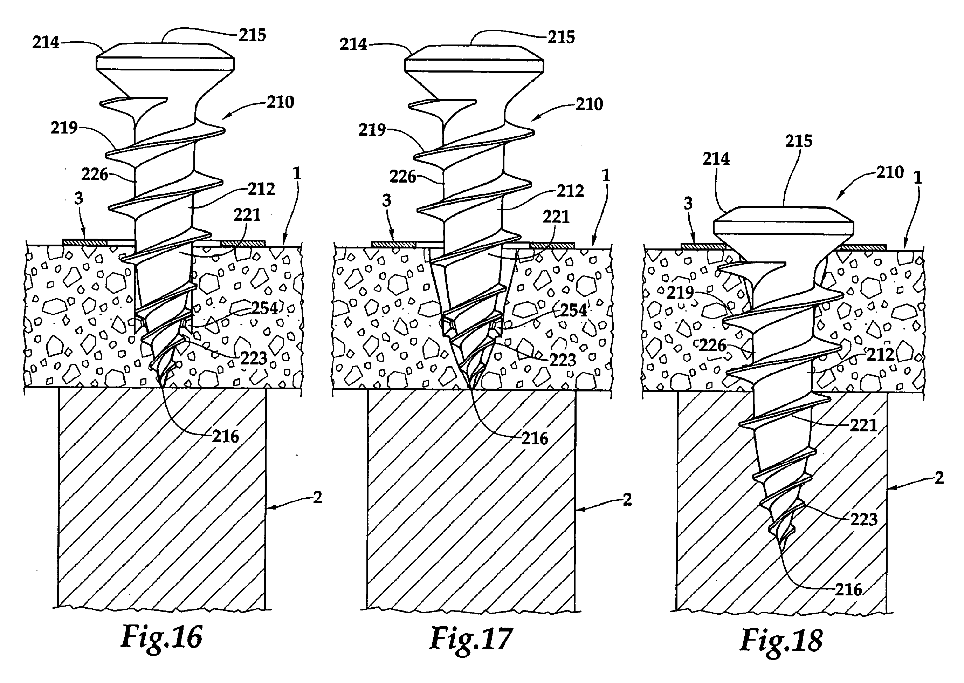

In this embodiment of the invention FIGS. 16 - 18 show various states of installation into drywall with a support member opposite the point of entry into drywall 1. FIG. 16 shows drywall fastener 210 having been driven through drywall 1 and initially contacting support member 2. Wings 254 have bored a hole in drywall 1 about the same diameter as proximal root 226. FIG. 17 shows the installation of drywall fastener 210 at a point shortly after the point shown in FIG. 16. When drilling tip 216 contacts support member 2, drywall fastener 210 stalls, which refers to the process that occurs when drywall fastener 210 stops advancing or advances at a slower rate through drywall 1 due to encountering relatively harder underlying support member 2. Stall occurs until drilling thread 223 advances sufficiently into support member 2 to begin drawing drywall fastener 210 through drywall 1 and support member 2. During the stall period drilling thread 223, wings 254, and any portion of member gripping threading 221 which has advanced into drywall 1, remove material from drywall 1. Because drilling thread 223 and member gripping threading 221 have crest diameters substantially smaller than drywall gripping threading 219, stalling creates a bore through which body 212 can advance without damaging drywall 1 yet still leaving sufficient material upon which drywall gripping threading 219 may act. FIG. 18 shows drywall fastener 210 fully engaged in drywall 1 and support member 2, fixing work piece 3 in place. At the point where wings 254 engage support member 2, occurring between the positions shown in FIG 17 and FIG 18, wings 254 break off decreasing installation torque and allowing member gripping threading 221 to act on support member 2.

The novel drywall fastener of the present invention allows a user to install the drywall fastener in drywall without being concerned about whether or not a stud member is located behind the drywall at the drywall fastening location or, as may be the case, when it is known that there is a stud member present.

While the foregoing written description of the invention enables one of ordinary skill to make and use what is considered presently to be the best mode thereof, those of ordinary skill will understand and appreciate the existence of variations, combinations, and equivalents of the specific exemplary embodiment and method herein. The invention should therefore not be limited by the above described embodiment and method, but by all embodiments and methods within the scope of the invention as claimed.

## Claims

1. A self drilling element for use in a friable material with or without an underlying support member at the point of use comprising:
an elongated body (212) having an axis, a threaded exterior (219) having a root (226), and a head (214) having torque transmitting surfaces (215) therein, a proximal portion (218), an intermediate portion (220), a distal portion (222), and a drilling tip (216) generally opposite said head (214);
said proximal portion (218) having an axial length and threads (219) for gripping said friable material having a root (226), a crest diameter (DC), and a thread height (DH);
said intermediate portion (220) having an axial length and threads (221) for gripping said member having a root (228), a crest diameter (MC) substantially smaller than said crest diameter (DC) of said proximal portion (218), and a thread height (MH) substantially smaller than said thread height (DH) of said proximal portion (218) ;
said distal portion (222) having an axial length and threads (223) for drilling into said member with a root (230) that tapers toward said drilling tip (216), a crest diameter (TC) substantially smaller than said crest diameter (DC) of said proximal portion (218), and a thread height (TH) substantially smaller than said thread height (DH) of said proximal portion (218),
wherein a ratio of said proximal portion crest diameter (DC) to root diameter is larger than a ratio of said intermediate portion crest diameter (MC) to root diameter and a ratio of said distal portion crest diameter (TC) to root diameter,
said element being **characterized by** the fact that
it is a fastener and
- its head is an enlarged and thick head (214) with an underside (264) tapering toward said root (226) of said proximal portion (218).

2. A self drilling fastener according to claim 1, wherein said underside (264) of said head (214) defines an angle C of about 49°.

3. A self drilling fastener according to any one of claims 1 and 2, wherein said ratio of said distal portion crest diameter to root diameter is larger than said ratio of said intermediate portion crest diameter to root diameter.

4. A self drilling fastener according to any one of claims 1 and 2, wherein said threaded exterior (219) of said distal portion (222) comprises a pair of threads each having a lead proximate said drilling tip (216).

5. A self drilling fastener according to one of claims 1 and 2, wherein said root (226) of said proximal portion (218) has a radius, said fastener further comprising at least one wing (254) protruding radially from said distal portion (222) to a distance from said axis approximately equal to said root radius.

6. A self drilling fastener according to one of claims 1 and 2, wherein the axial length of the intermediate portion (220) and the distal portion (222) is greater than a thickness of the friable material.

7. A self drilling fastener according to one of claims 1 and 2, wherein said threads (219, 221, 223) for gripping said friable material have a pitch and said root (226) of said proximal portion (218) between successive turns of said threads has an axial length of about one-half of said pitch.

8. A self drilling fastener according to one of claims 1 and 2, wherein said body is molded zinc alloy.

## Patentansprüche

1. Selbstbohrendes Element zur Verwendung in einem brüchigen Material mit oder ohne darunter liegendes Stützelement am Verwendungspunkt, das Folgendes umfasst:
einen länglichen Körper (212) mit einer Achse, einer Außenseite (219) mit Gewinde, einer Wurzel (226) und einem Kopf (214) mit Drehmoment übertragenden Oberflächen (215) darin, einem proximalen Abschnitt (218), einem Zwischenabschnitt (220), einem distalen Abschnitt (222) und einer Bohrspitze (216) allgemein gegenüber dem Kopf (214);
wobei der proximale Abschnitt (218) eine axiale Länge und Gewinde (219) zum Ergreifen des brüchigen Materials mit einer Wurzel (226), einem Scheiteldurchmesser (DC) und einer Gewindehöhe (DH) aufweist;
wobei der Zwischenabschnitt (220) eine axiale Länge und Gewinde (221) zum Ergreifen des brüchigen Materials mit einer Wurzel (228), einem Scheiteldurchmesser (MC), der wesentlich kleiner ist als der Scheiteldurchmesser (DC) des proximalen Abschnitts (218) und einer Gewindehöhe (MH), die wesentlich kleiner ist als die Gewindehöhe (DH) des proximalen Abschnitts (218) aufweist;
wobei der distale Abschnitt (222) eine axiale Länge und Gewinde (223) zum Bohren in das Element mit einer Wurzel (230), die zur Bohrspitze (216) hin konisch verläuft, einem Scheiteldurchmesser (TC), der wesentlich kleiner ist als der Scheiteldurchmesser (DC) des proximalen Abschnitts (218) und einer Gewindehöhe
(TH), die wesentlich kleiner ist als die Gewindehöhe (DH) des proximalen Abschnitts (218) aufweist;
worin ein Verhältnis des Scheiteldurchmessers (DC) des proximalen Abschnitts zum Wurzeldurchmesser größer ist als ein Verhältnis des Scheiteldurchmessers (MC) des Zwischenabschnitts zum Wurzeldurchmesser und ein Verhältnis des Scheiteldurchmessers (TC) des distalen Abschnitts zum Wurzeldurchmesser,
wobei das Element **dadurch gekennzeichnet ist, dass** es ein Befestigungselement ist und
- sein Kopf ein vergrößerter und dicker Kopf (214) mit einer zur Wurzel (226) des proximalen Abschnitts (216) hin konisch verlaufenden Unterseite (264) ist.

2. Selbstbohrendes Befestigungselement nach Anspruch 1, worin die Unterseite (264) des Kopfes (214) einen Winkel C von ca. 49° definiert.

3. Selbstbohrendes Befestigungselement nach einem der Ansprüche 1 und 2, worin das Verhältnis des Scheiteldurchmessers des distalen Abschnitts zum Wurzeldurchmesser größer ist als das Verhältnis des Scheiteldurchmessers des Zwischenabschnitts zum Wurzeldurchmesser.

4. Selbstbohrendes Befestigungselement nach einem der Ansprüche 1 und 2, worin die Außenseite (219) mit Gewinde des distalen Abschnitts (222) ein Gewindepaar umfasst, wobei jedes Gewinde eine führende benachbarte Bohrspitze (216) aufweist.

5. Selbstbohrendes Befestigungselement nach einem der Ansprüche 1 und 2, worin die Wurzel (226) des proximalen Abschnitts (218) einen Radius aufweist, wobei das Befestigungselement ferner zumindest einen Flügel (254) aufweist, der radial vom distalen Abschnitt (222) bis zu einem Abstand von der Achse, der ungefähr dem Wurzelradius entspricht, vorragt.

6. Selbstbohrendes Befestigungselement nach einem der Ansprüche 1 und 2, worin die axiale Länge des Zwischenabschnitts (220) und des distalen Abschnitts (222) größer ist als eine Dicke des brüchigen Materials.

7. Selbstbohrendes Befestigungselement nach einem der Ansprüche 1 und 2, worin die Gewinde (219, 221, 223) zum Ergreifen des brüchigen Materials eine Steigung aufweisen und die Wurzel (226) des proximalen Abschnitts (218) zwischen aufeinanderfolgenden Windungen der Gewinde eine axiale Länge von ca. einer halben Steigung aufweist.

8. Selbstbohrendes Befestigungselement nach einem der Ansprüche 1 und 2, worin der Körper eine geformte Zinklegierung ist.

## Revendications

1. Elément autoforeur pour l'utilisation dans un matériau friable avec ou sans organe de support sous-jacent au point d'utilisation, comprenant :
un corps allongé (212) ayant un axe, une partie extérieure filetée (219) ayant une base (226), et une tête (214) ayant des surfaces de transfert de couple (215) dans celle-ci, une portion proximale (218), une portion intermédiaire (220), une portion distale (222) et une pointe foreuse (216) généralement opposée à ladite tête (214) ;
ladite portion proximale (218) ayant une longueur axiale et des filets (219) pour mordre dans ledit matériau friable, ayant une base (226), un diamètre de crête (DC) et une hauteur de filet (DH) ;
ladite portion intermédiaire (220) ayant une longueur axiale et des filets (221) pour mordre dans ledit organe, ayant une base (228), un diamètre de crête (MC) substantiellement plus petit que ledit diamètre de crête (DC) de ladite portion proximale (218) et une hauteur de filet (MH) substantiellement plus petite que ladite hauteur de filet (DH) de ladite portion proximale (218) ;
ladite portion distale (222) ayant une longueur axiale et des filets (223) pour forer dans ledit organe avec une base (230) qui s'effile en direction de ladite pointe foreuse (216), un diamètre de crête (TC) substantiellement plus petit que ledit diamètre de crête (DC) de ladite portion proximale (218), et une hauteur de filet (TH) substantiellement plus petite que ladite hauteur de filet (DH) de ladite portion proximale (218),
un rapport dudit diamètre de crête (DC) de ladite portion proximale au diamètre de base étant plus grand qu'un rapport dudit diamètre de crête (MC) de ladite portion intermédiaire au diamètre de base et qu'un rapport dudit diamètre de crête (TC) de ladite portion distale au diamètre de base,
ledit élément étant **caractérisé en ce qu'**il s'agit d'une attache et
- sa tête est une tête élargie et épaisse (214) avec un côté inférieur (264) s'effilant vers ladite base (226) de ladite portion proximale (218).

2. Attache autoforeuse selon la revendication 1, dans laquelle ledit côté inférieur (264) de ladite tête (214) définit un angle C d'environ 49°.

3. Attache autoforeuse selon l'une quelconque des revendications 1 et 2, dans laquelle ledit rapport dudit diamètre de crête de ladite portion distale au diamètre de base est plus grand que ledit rapport dudit diamètre de crête de ladite portion intermédiaire au diamètre de base.

4. Attache autoforeuse selon l'une quelconque des revendications 1 et 2, dans laquelle ladite partie extérieure filetée (219) de ladite portion distale (222) comprend une paire de filets ayant chacun une partie d'attaque à proximité de ladite pointe foreuse (216).

5. Attache autoforeuse selon l'une quelconque des revendications 1 et 2, dans laquelle ladite base (226) de ladite portion proximale (218) a un rayon, ladite attache comprenant en outre au moins une aile (254) faisant saillie radialement depuis ladite portion distale (222) sur une distance audit axe approximativement égale audit rayon de base.

6. Attache autoforeuse selon l'une quelconque des revendications 1 et 2, dans laquelle la longueur axiale de la portion intermédiaire (220) et de la portion distale (222) est supérieure à une épaisseur du matériau friable.

7. Attache autoforeuse selon l'une quelconque des revendications 1 et 2, dans laquelle lesdits filets (219, 221, 223) pour mordre dans ledit matériau friable ont un pas et ladite base (226) de ladite portion proximale (218) entre des tours successifs desdits filets a une longueur axiale d'environ la moitié dudit pas.

8. Attache autoforeuse selon l'une quelconque des revendications 1 et 2, dans laquelle ledit corps est un alliage de zinc moulé.
